# EUROPEAN PATENT APPLICATION

(11) **EP 0 522 678 A2**
(43) Date of publication of application: **13.01.1993**
(21) Application number: 92302108.3
(22) Date of filing: 12.03.1992
(51) Int. Cl.: C09C 3/06, C09C 1/00, C09D 5/08

(54) **The treatment of lamellar or plate-like materials**

(30) Priority: 22.07.1991 GB 9115764; 19.03.1991 GB 9105752
(71) Applicant: Cookson Laminox Limited, Peterlee, County Durham SR8 2HR (GB)
(72) Inventor: CARTHEY, Nicholas Andrew, Kidlington Oxon OX5 2XL (GB); WHITE, Keith William Peter, Kidlington Oxon OX5 2XL (GB)
(74) Representative: Allard, Susan Joyce

(57) **Abstract**

A method for the treatment of a lamellar or flaky pigment or extender which comprises forming an iron, aluminium, magnesium or calcium phosphate coating, or a mixture thereof, on the surface of the particles of the material characterised by the treatment of the particles with an aqueous phosphoric acid/iron, aluminium, magnesium and/or calcium phosphate solution containing an excess of phosphoric acid, at least a part of the treatment being carried out at an elevated temperature of up to about 100°C.

## Description

The present invention relates to a method for the treatment of lamellar or flaky materials and, in particular, to a method for the preparation of a synthetic micaceous iron oxide product which has an improved performance in relation to its corrosion inhibition properties.

Micaceous iron oxide (MIO) consists of Fe₂O₃ with a flake-like particle structure. It is employed as a pigment for protective paints in a range of binders e.g. alkyds, vinyls, epoxies and urethanes. Micaceous iron oxide paints are used to protect many types of steel structures including bridges, storage tanks, electricity-pylons and railway gantries.

The protective action (known as the barrier effect) is due to the alignment of pigment platelets within the paint film, forming tightly packed layers lying roughly parallel to the substrate. The overlapping particles, encapsulated in binder solids, act as a barrier against permeation of corrosive ions and shield the binder from UV degradation.

Since the early 1900s, micaceous iron oxide pigment has been obtained from iron ore deposits located in various parts of the world. The chemical and physical characteristics, as with other natural mineral oxides, depend very much on the constitution of the source material and from where it is obtained. Variations in the morphology of natural micaceous iron oxide pigments, (ranging from lamellar to granular) affect the protective properties considerably. Therefore great care is needed in selecting pigments of suitable quality for long-term durability.

Synthetic micaceous iron oxide may be made by, for example, a series of chemical reactions which involve a first stage chlorination of metallic iron to produce ferric chloride, a second stage complexation of the ferric chloride with sodium chloride to form NaFeCl₄, and a third stage oxidation of this complex to form lamellar iron oxide.

A synthetic micaceous iron oxide having a particle size in the range of from 5 to 75 micrometres, with a 3 to 4% retention on a 63 micrometre sieve is known as LAMINOX-S. A synthetic micaceous iron oxide having a particle size range below 20 micrometres, and a lamellar thickness of 2 to 4 micrometres is known as LAMINOX-F. (LAMINOX is a Registered Trade).

We have now developed a method for the treatment of lamellar or flaky pigments or extenders which serves to enhance their anti-corrosive action by providing a thin layer of iron, aluminium, magnesium or calcium phosphate, or a mixture thereof, on the surface of the particles of the material, thus combining both barrier and chemically inhibitive properties.

Accordingly the present invention provides a method for the treatment of a lamellar or flaky pigment or extender which comprises forming an iron, aluminium, magnesium or calcium phosphate coating, or a mixture thereof, on the surface of the particles of the material by treatment of the particles with an aqueous phosphoric acid/iron, aluminium, magnesium and/or calcium phosphate solution containing an excess of phosphoric acid, at least a part of the treatment being carried out at an elevated temperature of up to about 100°C.

Examples of materials which may be treated in accordance with the invention are natural or synthetic micaceous iron oxide, or the lamellar forms of alumina, alumina hydrate, zinc oxide, aluminium silicate (mica), magnesium silicate (talc), sodium silicate, magnesium aluminium silicate, huntite (Mg₃Ca(CO₃)₄), hydromagnesite (Mg₄(CO₃)(OH)₂.3H₂O), or the flaky forms of aluminium, zinc and glass pigments. Natural or synthetic micaceous iron oxide are the preferred materials for treatment in accordance with the invention.

The treatment of the lamellar or flaky material is preferably carried out by initiating the treatment with the phosphoric acid/iron, aluminium, magnesium and/or calcium phosphate solution at ambient temperature, and gradually raising the temperature of the treatment solution to a temperature in the range of up to about 100°C, preferably at or above 75°C, more preferably at about 100°C i.e. at the boiling point of the solution.

In the process of the present invention, a solution of an iron, aluminium, magnesium or calcium phosphate, or a mixture thereof, is prepared containing an excess of phosphoric acid and this solution is slowly decomposed by heating to deposit the orthophosphate or mixture on the lamellar or flaky material. It will be understood by those skilled in the art that the phosphate solution may be prepared from any suitable salts of the metals, for example calcium carbonate may be dissolved in excess phosphoric acid.

A pretreatment step may be desirable in order to provide sites on the particles of the lamellar or flaky material for the iron, aluminium, magnesium or calcium phosphate to bind to, or to key, or roughen the surface of the particles. The pretreatment step will depend upon the material which is to be treated. Micaceous iron oxide may be treated with phosphoric acid, whilst glass would generally require a pretreatment with sodium hydroxide or hydrofluoric acid.

Thus, for example, on stirring a suspension of micaceous iron oxide with a cold solution of iron, aluminium, magnesium or calcium phosphate containing phosphoric acid and gradually warming the mixture to 75°C, a deposit of iron, aluminium, magnesium or calcium phosphate gradually builds up on the micaceous iron oxide. The process is thought to involve an initial etching of the micaceous iron oxide by the free phosphoric acid, thus providing nucleation sites for the growth of the iron, aluminium, magnesium or calcium phosphate layer. This allows even coating of the material with reasonably small particles of iron, aluminium, magnesium or calcium phosphate. If the surface of the particles is very smooth, as it is with LAMINOX, then a pretreatment in hot 0.5 to 2% phosphoric acid to provide some nucleation sites may be desirable. This pretreatment may consist simply of boiling the stirred LAMINOX slurry with the acid for 1 to 3 hours, depending on the form of the oxide, when small crystals of phosphate will be formed on the surface.

Alternatively, an initial coating of one of the metal phosphates may be provided on the particles of the material and a subsequent coating of one of the other phosphates applied thereto. For example, a coating of iron phosphate may be applied over a coating of aluminium phosphate. This latter technique is useful for coating milled LAMINOX samples with iron phosphate, which do not coat effectively unless aluminium phosphate is pre-deposited.

The process of the present invention may be used for the treatment of natural or synthetic micaceous iron oxide, as well as for the treatment of other lamellar or flaky pigments or extenders.

The present invention also includes within its scope a corrosion inhibiting paint composition which comprises at least one flaky or lamellar pigment or extender the corrosion inhibiting properties of which have been improved by the formation of an iron,, aluminium, magnesium or calcium phosphate coating, or a mixture of such coatings, on the surface of the particles by treatment of the material with an aqueous phosphoric acid/iron, aluminium, magnesium and/or calcium phosphate solution containing excess phosphoric acid.

The present invention will be further described with reference to the following non-limiting Examples.

### Example 1

10g of natural micaceous iron oxide (containing silica impurity) was stirred with 400ml solution containing 5g of iron orthophosphate dihydrate and 15ml 85% orthophosphoric acid. On warming to 75°C, and stirring for 30 minutes, a crystalline layer of insoluble iron phosphate was formed on the surface of the iron oxide and on the silica impurity. After filtering and washing with water, and drying at 100°C, the weight increase was 36%.

### Example 2

10g of LAMINOX-S were stirred with 40ml of a solution containing iron orthophosphate and orthophosphoric acid as described in Example 1. After stirring for 1 hour 15 minutes at 75°C, a layer of insoluble iron phosphate was formed on each particle. After filtering and washing with water, and drying, the weight increase was 42%.

### Example 3

10g of LAMINOX-F were stirred with 500ml of a solution containing 10g of iron orthophosphate dihydrate and 30ml of 85% orthophosphoric acid. After stirring for 2 hours at 75°C, a layer of iron phosphate was formed on the particles, the weight gain, after filtering and washing and drying, was 27%.

### Example 4

500g of LAMINOX-S were stirred with 4 litres of a solution containing 50g of iron orthosphosphate dihydrate and 200ml of 85% orthophosphoric acid. After stirring for 1 hour at 75°C, a layer of iron phosphate had been deposited on the particles, the weight increase after filtering and washing and drying, being 6%.

### EXAMPLE 5

5g of LAMINOX-F (previously boiled for 1 hour with 1% orthophosphoric acid, filtered and washed with water), was stirred with 400ml of a solution containing 5g of iron orthophosphate dihydrate and 15ml of 85% orthophosphoric acid. After stirring for 30 minutes at 75°C, the treated LAMINOX-F was filtered off, washed with water, and dried, the weight of the phosphate deposit being 47% of the original LAMINOX-F weight.

### EXAMPLE 6

420g of LAMINOX F was stirred with 51 of water and heated to 45°C. 33ml of 85% phosphoric acid were added and the mixture boiled for 1 hour to activate the LAMINOX. The suspension was cooled to 50°C, and 100g of iron phosphate dihydrate were added, followed by 266ml of 85% phosphoric acid, and the mixture stirred for 30 minutes to dissolve the iron phosphate. The mixture was reheated to 75°C, and stirred for one hour at this temperature. After filtering and washing with water, the coated material showed a 21% weight increase.

### EXAMPLE 7

200g of aluminium orthophosphate hydrate, of approximate composition AlPO₄.2H₂O, were heated with 167 ml of 85% orthophosphoric acid, with stirring, to 140°C, to form a pasty mass. After cooling to room temperature, the resultant solid was dissolved in 1.8 litres of water, and any undissolved material filtered off. The resultant solution was then diluted to 6.25 litres with water.

To the above solution was added 1 kg of LAMINOX-F (preferably pre-etched in phosphoric acid or pre-coated with iron phosphate), and the slurry was heated with stirring to the boiling point (100-101°C). After one hour, the mixture was filtered, and the product washed with water, and dried at 110°C, to yield LAMINOX-F coated with approximately 8% weight of amorphous aluminium phosphate.

### EXAMPLE 8

200g of aluminium orthophosphate dihydrate were stirred with 167ml of 85% orthophosphoric acid and the mixture heated to 135°C until water evolution had almost ceased and a pasty solid mass formed. This product was dissolved in 6.25 litres of water and any insoluble material filtered off.

1.1kg of LAMINOX-F, previously coated with 10% of iron phosphate, was added with stirring to the aluminium phosphate solution, which was then heated to boiling for 1 hour. After this time the suspension was allowed to cool, filtered, and washed with water. After drying at 120°C, the LAMINOX was coated with approximately 10% weight of amorphous aluminium orthophosphate.

### EXAMPLE 9

36g of aluminium orthophosphate dihydrate were stirred with 30 ml of 85% orthophosphoric acid and the mixture heated to 135°C until water evolution had almost ceased and a pasty solid mass formed. This product was dissolved in 2.25 litres of water and any insoluble material filtered off.

To 300ml of the above solution were added with stirring 48g of LAMINOX-F, and the mixture heated to 75°C for 40 minutes. After washing and drying, the product had a 4% coating of amorphous aluminium phosphate.

### EXAMPLE 10

20g of calcium carbonate were dissolved in 800ml water containing 31ml of 85% orthophosphoric acid. To 100ml of the above solution were added 10g of LAMINOX-F, and the mixture boiled for one hour. The product was filtered, washed with water, and dried at 120°C, when a weight gain of 15% was found.

### EXAMPLE 11

185g of calcium hydroxide was dissolved in a solution of 320ml 85% orthophosphoric acid and 5 litres water. This solution was then diluted with water to double the volume.

1.5kg of LAMINOX-F were then added to the solution with stirring, and the suspension boiled for 1 hour to deposit a coating of calcium hydrogen phosphate. After washing and drying at 120°C, the calcium and phosphorus analysis indicated a coating weight of 4%.

### EXAMPLE 12

Aluminium phosphate (20g) was suspended in 85% orthophosphoric acid (30 ml) and heated to 140°C to give a thick paste which on cooling was dissolved in water (2.5 litre).

Milled LAMINOX-S (200g), 85% orthophosphoric acid (135 ml) and iron phosphate (50g) were added to the stirred solution. The mixture was heated at 100°C. After 3 hours, the mixture was allowed to cool with stirring. After filtration and washing with water (2.5 litre), and drying at 110°C, milled LAMINOX coated with a mixed iron phosphate-aluminium phosphate layer was obtained, the weight increase being 30%.

## Claims

1. A method for the treatment of a lamellar or flaky pigment or extender which comprises forming an iron, aluminium, magnesium or calcium phosphate coating, or a mixture thereof, on the surface of the particles of the material characterised by the treatment of the particles with an aqueous phosphoric acid/iron, aluminium, magnesium and/or calcium phosphate solution containing an excess of phosphoric acid, at least a part of the treatment being carried out at an elevated temperature of up to about 100°C.

2. A method as claimed in claim 1 wherein at least a part of the treatment is carried out at about 100°C.

3. A method as claimed in claim 1 or claim 2 wherein the treatment is initiated at ambient temperature.

4. A method as claimed in any one of the preceding claims wherein the treatment is carried out over a period of 15 minutes to 2 hours.

5. A method as claimed in any one of the preceding claims wherein the surface of the material is pretreated with aqueous phosphoric acid.

6. A method as claimed in claim 5 wherein the pretreatment is carried out by heating a slurry of the material in 0.5 to 2% phosphoric acid.

7. A method as claimed in any one of the preceding claims wherein a first layer of one of the metal phosphates is deposited on the particles of the material, followed by a second layer of another of the metal phosphates.

8. A method as claimed in any one of the preceding claims wherein the material which is treated is natural or synthetic micaceous iron oxide.

9. A corrosion inhibiting paint composition which comprises at least one flaky or lamellar pigment or extender the corrosion inhibiting properties of which have been improved by the formation of an aluminium, magnesium or calcium phosphate coating, or a mixture thereof, on the surface of the particles by treatment of the material with an aqueous phosphoric acid/aluminium, magnesium and/or calcium solution containing excess phosphoric acid.

10. A corrosion inhibiting paint composition as claimed in claim 9 wherein the material has been treated by a method as claimed in any one of claims 2 to 8.
